# EUROPEAN PATENT SPECIFICATION

(11) **EP 3 353 043 B1**
(45) Date of publication and mention of the grant of the patent: **18.12.2019**
(21) Application number: 16791436.5
(22) Date of filing: 22.09.2016
(51) Int. Cl.: B62K 3/00, B62K 1/00

(54) **VEHICLE ON SPHERICAL SUPPORT AND METHOD FOR MANAGING THE MOVEMENT OF SAID VEHICLE**
FAHRZEUG AUF KUGELFÖRMIGEM TRÄGER UND VERFAHREN ZUR VERWALTUNG DER BEWEGUNG DIESES FAHRZEUGS
VÉHICULE SUR SUPPORT SPHÉRIQUE ET PROCÉDÉ DE GESTION DU MOUVEMENT DUDIT VÉHICULE

(30) Priority: 22.09.2015 IT UB20153785
(43) Date of publication of application: 01.08.2018
(73) Proprietor: Universita' Degli Studi Di Trieste, 34127 Trieste (IT)
(72) Inventor: UKOVICH, Walter, 34134 Trieste (IT); NOLICH, Massimiliano, 34144 Trieste (IT); ROMAN, Fabrizio, 33077 Sacile (IT)
(74) Representative: Pallini Gervasi, Diego
(86) International application number: PCT/IB2016/055657
(87) International publication number: WO 2017/051340

(56) References cited:
- JP-A- H04 201 793
- NL-C2- 1 033 676
- US-B2- 7 847 504

## Description

### FIELD OF THE INVENTION

The present invention relates to a method for managing the movement of a vehicle, i.e. a personal means of transport, on spherical support, and specifically relates to a method according to claim 1. Furthermore, the present invention relates to a vehicle, i.e. to a personal means of transport, on spherical support, which uses said method for managing its movement, according to claim 8.

### PRIOR ART

The continuous need over the past decades to find a solution to the problem of city traffic and pollution has led to redesign personal urban mobility. In this context, systems capable of providing high-level mobile services while minimizing energy consumption and supporting the large-scale switchover, for example, to cleaner and local renewable resources using electrical vehicles, such as bicycles, scooters or city cars, have been created.

One of the vehicles which has possibly revolutionized the concept of personal means of transport is described in Patent US 6,302,230. Such a vehicle, better known as "Segway", in addition to being eco-friendly and compact is much more versatile than a bicycle or a scooter because it may be used also in closed places, such as department stores, airports, offices, etc. The Segway comprises only two wheels which are parallel to each other and entrusts its equilibrium and movement to an electronic stability system. This system allows to maintain the vertical position and allows forward-backward and rotational movements. In particular, it is necessary to simply lean either forwards or backwards to move either forwards or backwards. In order to turn rightwards or leftwards, instead, it is necessary to move the handlebar either rightwards or leftwards, respectively, so that the vehicle can curve in either one direction or the other.

However, one of the greatest limitations of the Segway is that it cannot move sideways. Indeed, as mentioned above, in order to steer rightwards or leftwards the Segway behaves as a normal vehicle on wheels and thus requires a given space to be able to curve in a given direction. Thus, the Segway is certainly not adapted to move in very narrow spaces which would not allow it to follow a curvilinear trajectory.

The issue of obtaining a system capable of moving in all possible directions within small spaces is solved in the field of robotics by using spherical wheels. Document US 7,847,504, which discloses the features of the preamble of claim 1 and 8, describes a mobile robot which can move in equilibrium on a ball. This robot can move independently in all directions (forwards/backwards or rightwards/leftwards) without needing to travel curvilinear paths. This system uses a dynamic balancing method which measures parameters related to the movement of the robot with respect to the ground and employs a control system which can evaluate the forces needed which may be applied on the ball for the robot to remain in equilibrium on the vertical in response to external stresses.

However, a balancing method of this type is not properly adapted to be applied for managing the movement of a vehicle, such as a personal means of transport. In this case, indeed, forces and moments which must be managed very differently come into play given the presence of a driver aboard the vehicle. Specifically, the reaction times of the movement of such a system as that described in US 7,847,504 are not sufficiently brief, i.e. such as to avoid an imbalance and a consequence situation of danger for a possible driver aboard. Long reaction times may also determine jerking movements of the system, especially during changes of direction.

### SUMMARY OF THE INVENTION

It is the object of the present invention to thus overcome the drawbacks described above and to provide a method for managing the movement of a vehicle which is effective and functional, where the vehicle may move indifferently in all directions on a plane, and to make a vehicle which uses said method.

These purposes are achieved by a method for managing the movement of a ball-mounted vehicle comprising the features of claim 1, as well as a ball-mounted vehicle comprising the features of claim 8.

The method according to the present invention is adapted to manage the movement of a vehicle configured for transporting a load, wherein the vehicle comprises a ball and a support structure cooperating with said ball, wherein the ball represents the only point of contact with the ground and is configured to move the vehicle with respect to the ground. Specifically, the aforesaid method comprises the steps of measuring at least one parameter related to the position of the vehicle with respect to the ground by means of at least one sensor positioned on the vehicle and of processing the measurement of said parameter in a first subsystem which represents the pattern of the vehicle along the vertical plane yz, which divides the vehicle into its front and rear halves, and in a second subsystem, which represents the pattern of the vehicle along the vertical plane xz, orthogonal to plane yz, which divides the vehicle into its right and left halves. Furthermore, the method includes the step of estimating a dynamic state of the vehicle based on the processing of at least said parameter and of calculating control information by means of a control module. Finally, said method comprises the step of actuating at least one mechanism in response to the calculation of the control information to maintain the vehicle in an equilibrium state, wherein said mechanism is coupled with the ball. In particular, the processing of the measurement of the parameter in the first and in the second subsystem takes place in a parallel and synchronized manner.

The method according to the present invention allows an effective management of the movement of a vehicle which can move indifferently in all directions on a plane on which it rests. This method is particularly adapted to manage the movement of a means of transport adapted to transport a load and specifically for personal transport. Indeed, by virtue of the possibility of processing the measurement of the movement parameter of the vehicle according to two subsystems which are mutually orthogonal and independent, i.e. the one related to the forward/backward movement and the one related to the rightward/leftward movement, in synchronized manner, this method can react very rapidly to any type of movement of the vehicle on the plane, e.g. due to the movements of a possible driver aboard. In other words, two instances, each one dedicated to one of the two forward/backward and to the rightward/leftward subsystems, run in parallel in the control module, which is used to calculate the control information to be sent to the ball actuation mechanisms and which may be imagined as a single processor or control board. The word "instance" must be understood in this context as a programming code which deals with processing the parameter along a particular axis in space. Since these two instances manage two axes which are mutually uncoupled but operate in the control module in synchronized manner, i.e. refer to the same instant of time, the final calculation of the control information is considerably faster. As a consequence, the response of the vehicle to a movement will be faster too. In other words, the method according to the present invention is computationally simplified. In this manner, it is possible to make a low-power (both in terms of calculation and consumption) and low-cost embedded system which is effective and functional at the same time.

Furthermore, it is worth noting that in the present movement managing method a further simplification is made in order to estimate the dynamic state of the vehicle. In particular, in addition to processing the parameter related to the movement of the vehicle into two mutually orthogonal and independent subsystems, the estimate of the system state is carried out by means of a dynamic physical model which uses a linearization about the equilibrium point of the vehicle. This implies a considerable reduction in calculation complexity for estimating the system state with the consequent possibility of using low-performance hardware elements, i.e. which are cheaper.

In the context of the present invention, maintaining the vehicle in a state of equilibrium must be understood as the capacity of the present method, and thus of the vehicle itself, to react to a movement, i.e. to a variation of a previous dynamic state. In other words, if the vehicle is stationary, the vehicle will react to any movement by attempting to maintain the system as close to equilibrium as possible, remaining in that position. However, if the vehicle is moving and proceeds in a given direction, the system will attempt to maintain such a movement condition until a clear variation is determined in the speed and/or orientation of the direction. It is worth noting that with regard to maintaining the state of equilibrium, the control module confers a higher priority to managing the equilibrium of the stationary vehicle than to managing the equilibrium of the moving vehicle. In other words, the method according to the present invention firstly deals with maintaining the vehicle on the spot and only later deals with managing the continuous movement of the vehicle in a given direction.

According to a preferred embodiment of the present invention, the measurement of the parameter in the first subsystem is processed by a first control board, while the measurement of the parameter in the second subsystem is processed by a second control board. In other words, in this embodiment, the control module instead of being a single processor comprises two control boards, in which the instance dedicated to the forward/backward subsystem operates on a different board from the instance dedicated to the rightward/leftward subsystem. This configuration considerably simplifies the uncoupled, but at the same time synchronized, management of the two subsystems. The two control boards work in a master/slave configuration in order to be able to better manage the vehicle movements in the two uncoupled subsystems. In particular, one of the two boards, e.g. the first control board, is the master board, which assumes a one-way control of the second control board, which is thus the slave board.

According to another preferred embodiment of the present invention, the estimate of the dynamic state of the vehicle and the calculation of the control information are carried out only by the first control board, i.e. by the master board. In this manner, the communication of information between the two control boards is limited only to the step of reading the data measured by the sensor and to the step of sending the controls to the actuation mechanism. This has the effect of considerably reducing the control cycle time and thus further speeding up the management of the movement of the vehicle.

According to a preferred embodiment of the present invention, the processing of the measurement of the parameter related to the position of the vehicle with respect to the ground further comprises calculating the variation of said parameter as a function of time. In this manner, also considering the speed of the vehicle with respect to the ground, a more reliable estimate of the dynamic state of the vehicle can be obtained. Alternatively, the variation of the position of the vehicle over time (angular and/or linear speed) may be measured directly by means of a dedicated sensor positioned on the vehicle itself.

According to another preferred embodiment of the present invention, the method comprises the step of measuring a first parameter (β) related to the angle traveled by the ball with respect to the ground and a second parameter (α) related to the inclination of the vehicle with respect to the vertical of the ground. In this manner, by virtue of the simplifications mentioned above, the method can manage the movement of the vehicle by merely measuring two angles which define the movement and the inclination of the ball with respect to the ground.

The method according to the present invention uses a feedback system for calculating the control information. Specifically, it uses a Proportional Integral Derivative (PID) controller. Alternatively, the method uses an optimal controller LQ. According to a preferred embodiment of the present invention, in order to optimize control on the inclination angle, the variation over time of the first parameter, i.e. the displacement speed of the means with respect to the ground, is used to adjust the second parameter, i.e. the inclination of the means with respect to the vertical to the ground, for calculating the control information by means of a PID controller. In a PID controller used by the method of the present invention, the internal controller adjusts the inclination angle of the means. It adjusts its output so that the angle α of the controller system assumes the reference value that the controller itself receives in input. However, the equilibrium angle measured by the sensor may be misaligned with respect to the real equilibrium angle (this is nearly a certainty in a real system). This means that, in order to remain in equilibrium, the linear speed of the means is increased until the actuators are saturated and eventually it falls all the same. It is therefore necessary to use a speed controller which adjusts the reference angle received from the internal PID so as to avoid this problem. This also allows to increase the robustness of the system in case of interferences or of a model which is not perfectly consistent with reality. According to another preferred embodiment of the present invention, the method comprises the step of measuring a third parameter related to the rotation angle about the vertical axis of a handlebar associated with the support structure. The handlebar is fixed with respect to the structure with regard to forward, backward, rightward and leftward movements but can rotate about its own vertical axis. The measurement of this third parameter, which controls the rotation of the handlebar and thus of the support structure with respect to the vertical to the ground, is used to estimate the dynamic state of the system, and consequently obtain a more complete management of the vehicle. It is worth noting that the possibility of the support structure to rotate about its vertical axis offers the huge advantage to the driver aboard the vehicle to vary the orientation of the structure, and thus the line of vision, by simply acting on the handlebar, rotating it slightly in one direction or another, without the vehicle, specifically the ball, necessarily moving from its position. In other words, this allows a rotation of the vehicle on the spot.

The vehicle according to the present invention is configured for transporting a load comprising a ball and a support structure cooperating with said ball, wherein the ball is the only point of contact with the ground and is configured for moving the vehicle with respect to the ground. The vehicle further comprises at least one sensor for measuring at least one parameter related to the position of the vehicle with respect to the ground and a control module for processing the measurement of said parameter in a first subsystem which represents the pattern of the vehicle along the vertical plane yz, which divides the vehicle into its front and rear halves, and in a second subsystem, which represents the pattern of the vehicle along the vertical plane xz, orthogonal to plane yz, which divides the vehicle into its right and left halves and for estimating a dynamic state of the vehicle based on the processing of at least said parameter and calculating control information. Finally, the vehicle comprises a mechanism coupled to the ball which is actuated in response to the calculation of the control information to maintain the vehicle in an equilibrium state. In particular, this vehicle is characterized in that the control module processes the measurement of the parameter in the first and in the second subsystem in parallel and synchronized manner.

This vehicle, which can move indifferently in all directions on the plane on which it rests, is particularly adapted for managing the movement of a means adapted to transport a load and specifically for personal transport. Indeed, by virtue of the possibility of processing the measurement of the movement parameter of the vehicle according to two subsystems which are mutually orthogonal and independent, i.e. the one related to the forward/backward movement and the one related to the rightward/leftward movement, in synchronized manner, this vehicle can react very rapidly to any type of displacement, e.g. due to the movements of a possible driver aboard.

In the vehicle according to the present invention, the mechanism which is actuated in response to the calculation of the control information represents an actuation system consisting, for example, of at least motors, transmission elements and wheels, as well as a power supply system and a circuitry to guarantee a communication between these elements, the components related to the sensor, the ball and the control module.

In particular, the vehicle comprises at least three pairs of motors and wheels in which the wheels are in contact with the ball surface which are actuated to manage the movement of the ball. In a preferred embodiment of the invention, the vehicle comprises four pairs of motors and wheels so as to improve the distribution of forces to be able to support greater weights and for reasons of redundancy, i.e. in case of malfunction of one of the pairs. The motors may be associated in pairs, two for the forward/backward movements and two for the rightward/leftward movements. Specifically, the motors may be direct current permanent magnet motors of the brushed type or the like, and the wheels may be of the Omniwheel type or the like, i.e. wheels which allow the movement with respect to the plane on which they rest also in orthogonal direction with respect to the rotation plane thereof. Alternatively, it is still possible to use brushless type motors. The position of the point of contact of the wheels on the surface of the ball with respect to the vertical axis must be chosen so as to limit the stress on the wheels and to maintain degrees of freedom in the control of the ball. The wheels may be positioned at an angle comprised between 40 and 50 degrees, preferably of 45 degrees with respect to z axis itself and may be inclined with respect to the vertical by an angle comprised between 5 and 10 degrees, preferably of 7.5 degrees.

In order to control and drive the motors, each motor is associated to a driver to manage the currents drawn by the motor itself. In a preferred embodiment, the drivers are controlled in drive-brake mode which allows a greater control linearity in the relationship between duty cycle and axis rotation speed.

The power supply of the system is provided by at least five batteries, e.g. 12 V lead-gel or the like. In particular, one battery is dedicated to supplying the control module, while two batteries, arranged in series, are dedicated to the front and rear motor and the other two batteries are dedicated to the side motors (right and left). The fact of separating the battery of the motors from that of the control module allows a better management of the peak current phenomenon of the motors which, at start-up, may generate a voltage drop sufficient to cause the temporary switch-off of the module itself. In order to increase the vehicle range, it is possible to use a higher number of batteries and/or to vary the type of batteries, by using ion lithium or fuel cell batteries, for example.

The ball is made of a hard material in order to avoid equilibrium management problems caused by its deformation. However, the material must not be too hard. Excessive hardness of the material of the ball would as a matter of fact lead to a lower friction between the wheels and the ball itself, as well as between the ball and the ground. The size must also be chosen according to certain criteria. An excessively small ball does not allow simple traction because, although the size of the ball can be easily determined, the same does not apply to the drive wheels which must maneuver it. Instead, an excessively large ball, in addition to exhibiting evident problems of cost, also exhibits two serious problems, i.e. high inertia and moment of inertia and the center of gravity of the vehicle which is raised because the wheels and the rest of the structure must stay at least over the equator of the ball itself.

In a preferred embodiment, the ball is solid and made of hard polyurethane rubber (hardness index 90-95 on the Shore scale) with a diameter of 200 mm for moving the vehicle. Given the hardness of such material, the problem of low friction may be solved by sanding the ball with coarse grain sandpaper or by rubberizing it. The fact that the ball surface is not perfectly smooth, resulting from the ball manufacturing process, also guarantees an accurate reading by the optical sensors.

Alternatively, in order to reduce the total weight of the vehicle, the ball may be a hollow metal ball (e.g. made of aluminum) with exterior rubberization. In particular, the ball may be empty with a metallic core to decrease the mass in play, determining a lower inertia and moment of inertia.

In order to avoid the accumulation of electrical charges on the surface of the ball, which is made of plastic material, it is possible to use motors with antistatic carbon fiber brushes. Such brushes would guarantee the further advantage of decreasing the amount of dust which is deposited on the drive wheels.

The various components forming this actuation system are arranged according to a precise criterion so as to best satisfy the requirements, mutually contrasting in some circumstances.

Firstly, the center of gravity of the entire system must be maintained as low as possible. In other words, the components must be positioned as close to the ground as possible. Furthermore, the weights of the components must be arranged as symmetrically as possible. Indeed, an excessively asymmetric arrangement of the components may determine a difficulty of the vehicle to maintain equilibrium. The components must then be as compact as possible in order to reduce the total volume and be arranged so as to guarantee a sufficient inclinability of the vehicle for the purposes of good maneuverability. In addition, in order to minimize the normal efforts on the wheels, these must be positioned as high as possible on the ball without however having a perfectly vertical rotation plane so as to permit rotation movements about the vertical axis.

Finally, the ball must be maintained in the housing also during the lifting of the vehicle and there must be sufficient space for the control boards and the wiring.

In a preferred embodiment of the present invention, the control module comprises a first control board for measuring the parameter in the first subsystem and a second control board for measuring the parameter in the second subsystem. Advantageously, one board may be directly connected to a sensor dedicated to the movement of the vehicle in one subsystem (e.g. forwards/backwards), while the other board may be directly connected to another sensor dedicated to the movement of the vehicle in the other subsystem (e.g. rightwards/leftwards). Preferentially, the two control boards are two Arduino Due boards interconnected to each other by means of a serial bus. The collected data and the processed information are exchanged by means of such a bus.

In a further embodiment, the vehicle comprises an optical sensor positioned at a close distance from the surface of the ball for measuring a first parameter related to the angle traveled by the ball with respect to the ground and a device for measuring a second parameter related to the inclination of the vehicle with respect to the vertical of the ground.

In the vehicle according to the present invention, the optical sensor for measuring the first parameter consists of an optical mouse which may carry out measurements directly on the ball and not on the axes of possible motors associated thereto. This allows a more accurate measurement in the case of slippage between the drive wheels of the actuators and the ball. The vehicle comprises at least one of these optical mouse devices. However, in a preferential configuration, the vehicle comprises two optical mouse devices so as to guarantee the measuring of the movement of the ball along each of the two fundamental axes and for a matter of redundancy in case of malfunctioning of one of the two devices. The mouse devices may be provided with an elastic support structure, e.g. a spring, in order to optimize the reading by the optical mouse devices and prevent them from moving away and towards the surface of the ball in rapid sequence because of involuntary vibrations, for instance.

Alternatively, instead of the optical mouse, it is possible to consider the use of one or more angular position transducers (encoders), which convert the angular position of their rotation axis into digital numeric signals. Two or three encoders could be, for example, fixed to an equal number of passive multidirectional wheels resting on the ball so as to guarantee a better odometry. However, it is worth noting that although this device guarantees a more accurate measurement of the displacement angle of the ball, this measurement could be somehow distorted in case of slippage of the device on the ball surface.

In order to improve vehicle stabilization and have a feedback loop in the control process, analog sensors can be used in combination with the optical sensor, such as for example Hall effect sensors, associated to motors, to provide feedback concerning the currents drawn by the single motors, and to thus record their movement. It is worth noting that these analog sensors may also be used for measuring the first parameter related to the variation of the position of the ball with respect to the ground. Additionally, the Hall effect sensors may be used to manage possible malfunctions of the motors because they can offer information concerning possible faults to one of the actuators.

In the vehicle according to the present invention, the device for measuring the second parameter, i.e. inclination of the vehicle with respect to vertical of the ground, consists of an accelerometer/gyroscope of the six-axis MEMS type or the like for analyzing the linear acceleration and angular speed data.

In another embodiment of the invention, the support structure of the vehicle comprises a handlebar fixed with respect thereto and configured to rotate about its vertical axis. The vehicle further comprises a device for measuring a third parameter related to the angle of rotation about the vertical axis of said handlebar. The handlebar is designed to allow an easy control of the vehicle, but also to provide a firm grip for the driver. The base of the handlebar according to the present invention exhibits a major difference from the one present on vehicles known in literature. The Segway, for example, comprises a handlebar having a degree of freedom of inclination with allows the control board of the means to have information concerning the driver's intention to rotate the means. In the vehicle according to the present invention, instead, this is not possible in order to prevent dangerous situations for the driver. Indeed, as opposed to the Segway, the support structure of the vehicle according to the present invention may pivot also leftwards/rightwards. Therefore, if the handlebar could move in such a direction, it would not provide a reliable gripping point for the driver. A slight asymmetry in the driver's position and/or a slight weight difference applied to the two feet could have caused an involuntary inclination of the support structure, causing a very unstable equilibrium of the system as a whole. For such a reason, the handlebar is fixed with respect to support structure, in all cases allowing it to rotate about the vertical axis (within given limits). Specifically, the handlebar may rotate by about 15-25 degrees leftwards and about 15-25 degrees rightwards, for a maximum of about 35-45 degrees in total, with respect to a resting position. The relative position of the handlebar with respect to the orientation at rest thus determines the direction towards which the driver intends to rotate the means. Additionally, the handlebar can be detached from the support structure to guarantee an easy removal thereof should the vehicle need to be transported, with the purposes of reducing its dimensions. Furthermore, the vertical axis of the handlebar may be hollow to allow the passage of electrical wires towards a control panel present on the handlebar itself.

The device for measuring the third parameter, i.e. the rotation of the handlebar, consists of a potentiometer or the like.

The control panel comprises two switches for the power supply, a double one for the motors and one for the control module, a switch for selecting the operating mode and one for safe stopping. Finally, the control panel comprises an accessory switch for managing the steps of programming and processing of the software aboard the control module.

Additionally, the handlebar could be provided with a graphic interface for providing information concerning the range, i.e. battery charge, position, speed and so on.

In order to obtain a remote or automatic control of the vehicle, the vehicle could also be provided with a device which uses GPS type tracking.

Finally, the vehicle according to the present invention may be provided with the devices which are useful, and in many cases necessary, to be able to move on a public road respecting the rules of the road. In other words, the vehicles may be simply provided with light and audible signaling devices, rear-view mirrors, headlights, stands etc.

By means of the movement managing method according to the present invention, the ball-mounted vehicle described above can balance and remain in equilibrium with or without a driver aboard. Furthermore, the vehicle can move in any direction on the ball resting plane by means of a slight inclination of the handlebar towards the desired direction. In other words, in order to move forwards, the driver must lean on the handlebar and push it forwards, to move leftwards, instead, the driver must lean on the handlebar and push it leftwards, and so on. Since the handlebar is fixed with respect to support structure, leaning on it means moving the overall weight of the driver with respect to vehicle and thus actuating a response mechanism to such a displacement. It is apparent that the driver may obtain the same result without leaning on the handlebar, by simply varying his or her weight distribution on the platform. However, the presence of a handlebar, fixed with respect to the platform, increases the stability and the safety of the driver him or herself. A further function of the handlebar is to allow a rotation of the vehicle on itself. In order to be able to rotate the vehicle rightwards, the driver simply needs to grip the handle and rotate the handlebar rightwards. In order to rotate the vehicle leftwards, the driver must naturally rotate the handlebar leftwards.

### BRIEF DESCRIPTION OF THE FIGURES

These and other aspects of the present invention will be more apparent in light of the following description of some preferred embodiments described below.
- Fig. 1: shows a schematic diagram of a method for managing the movement of a vehicle on wheels according to an embodiment of the present invention;
- Fig. 2: shows a schematic diagram of a method for managing the movement of a ball-mounted vehicle according to an embodiment of the present invention with reference to the communication of two control boards;
- Fig. 3: shows a diagrammatic representation of the ball-mounted vehicle for the purposes of the physical dynamic model used in the movement managing method according to an embodiment of the present invention;
- Fig. 4: shows a block diagram of the vehicle according to an embodiment of the invention;
- Fig. 5A-5C: show a diagrammatic representation of a ball-mounted vehicle according to a preferred embodiment of the present invention seen from the side (4A), see from the bottom (4B) and with reference to the arrangement of the mechanical components with respect to the ball (4C); and
- Fig. 6: shows a functional diagram of the electronic system of the vehicle on wheels according to any embodiment of the present invention.

### DESCRIPTION OF THE INVENTION

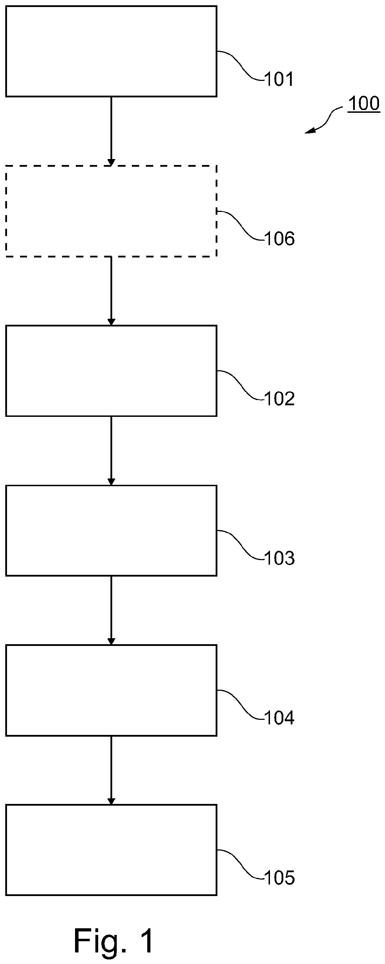

Figure 1 describes the various steps of the method 100 for managing the movement of a ball-mounted vehicle according to a preferred embodiment of the present invention. The software aboard the vehicle constantly verifies the system state and at the same time carries out a control with the purpose of maintaining the vehicle in a state of equilibrium. The method may be summarized in the steps of measuring and collecting data 101, processing the data 102, estimating the dynamic state 103, calculating the control information 104 and actually controlling the actuators 105.

During the first step, i.e. the step of data measuring and collecting 101, the data related to a given parameter of concern are read by the sensors, such as for example the optical mouse devices, the potentiometer connected to the handlebar, the Hall effect sensors aboard the motor drivers, the mode switch and the stop button, and are collected by the control module. In order to improve the collected data quality, immediately after the step of data measuring and collecting 101, the method 100 may include an optional step of data filtering 106. Since the raw data may be affected by non-negligible noise, they may be filtered in order to be made usable. It is worth noting that this step 106 may be avoided in given conditions.

In a subsequent step 102, the measuring of the concerned parameter is processed in a first subsystem related to the movement of the vehicle in the forward/backward direction and a second subsystem related to the movement of the vehicle in the rightward/leftward direction. In a three-axis reference system XYZ, vertical plane YZ divides the vehicle into its front and rear halves, while vertical plane XZ divides the vehicle into its right and left halves. This processing in the two subsystems is carried out in the control module in parallel and synchronized manner.

During the step of estimating the dynamic state 103, the information extracted and processed by the possibly filtered data are used to estimate the system state. For example, the inclination of the means, the speed, the position on the plane of the ground and the angle changing speed of the ball with respect to the ground are evaluated. In addition to these variables, the orientation of the handlebar used in the step of controlling for managing the rotation of the vehicle about the vertical axis z may also be estimated.

The duty cycle values to be input to the single drivers of motors are processed during the following step of calculating the control information 104. The controller, e.g. PID or LQ, will be processed during this step. Information concerning the movement of the ball will be possibly fused with the information concerning the orientation of the handlebar to calculate the rotational torque. Specifically, the information calculated by the control module is used to send a signal corresponding to the motor drivers.

The motors are actually controlled during the final step of actuating the mechanism to maintain the vehicle in an equilibrium state 105. During this step, the control module provides the signal, e.g. PWM (pulse-width modulation), with indications on the direction of rotation to the drivers which, as a consequence, will control the motors.

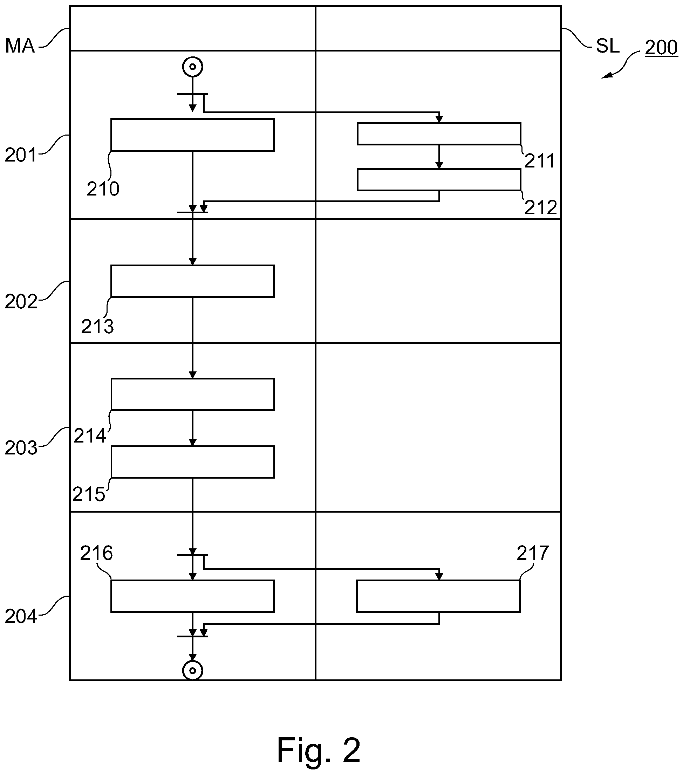

Figure 2 describes a diagram 200 related to the method for managing the movement of the ball-mounted vehicle according to an embodiment of the invention in which the control module comprises two control boards, a Master board (MA) and a Slave board (SL). In particular, a functional diagram of the processing cycle of the software in the control module is described. Figure 2 shows the functionality of the two control boards and specifically their operation in parallel for some steps similar to the method 100 described in figure 1.

During the first step 201, the first control board, i.e. the master board MA, manages the reading and filtering of the data from a first mouse (related to the forward and backward movement of the ball), of the accelerometer/gyroscope, of the potentiometer, of the stop button, of the mode switch and of the Hall current sensors 210. In parallel and synchronized manner, the second control board, i.e. the slave board SL, manages the reading and filtering of the data of a second mouse (related to the rightward/leftward movements of the ball) 211. Once the data are read and filtered, the slave board SL sends such information to the master board MA 212.

The second and the third steps 202 and 203, i.e. the estimate of the dynamic state 213 and the calculation of the control information 214, are managed solely by the master board MA. In particular, the master board MA sends the calculated information related to the control of the side motors, i.e. the right and left side motor, to the slave board SL 215.

Subsequently, during the final step 204, the master board MA and the slave board SL manage the control of the front and rear motors 216 (by the master board MA) and the control of the side motors 217 (by the slave board SL) in parallel.

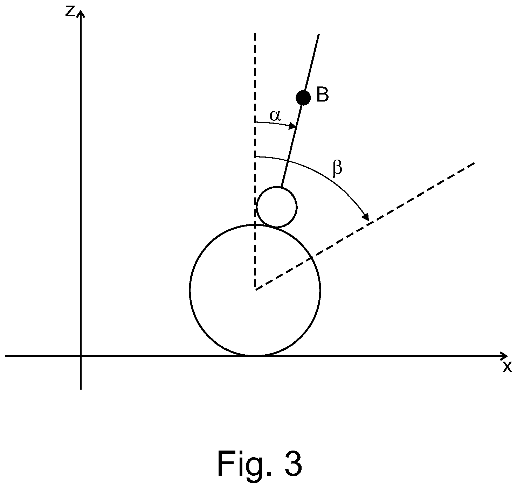

The software running cycle time is fundamental for the good operation of the equilibrium control system. For an effective control, it must be possible to run the complete cycle tens of times in one second. With the complete software implementation according to the cycle in figure 2, 100 cycles can be run in about 1.5 seconds. This means that the cycle is run about 70 times every second. Figure 3 diagrammatically describes a representation of the vehicle as a function of the physical model used to estimate the system state according to the present invention.

The system model is obtained from a vehicle simplified system. In particular, as previously mentioned, the overall system is seen as the union of two subsystems which are mutually uncoupled. In this manner, by not reciprocally influencing each other, the two subsystems can be treated separately. The two simplified models were obtained by sectioning the system by means of two mutually perpendicular vertical planes, the plane yz which divides the vehicle into its front and rear halves and the plane xz which divides the vehicle into its right and left halves. The two subsystems thus obtained are identical, and for this reason only one of them is analyzed, i.e. the subsystem which represents the trend along the vertical plane xz, as shown in figure 3.

For the model analysis, α is the inclination angle with respect to the vertical and β is the rotation angle of the ball with respect to the ground.

The two-dimensional vehicle/operator system is assumed as formed by a ball of mass m_{sfr}, a set of mass components mᵢ representing some parts of the vehicle and another set of components, which models the operator or the driver aboard. The moment of inertia for each component must be calculated with respect to the center of gravity B of the system as a whole. By way of example, during the construction of the model, it is assumed that the centers of gravity of the ball, of the vehicle including all components and of the operator are aligned.

The ball can be modeled as a solid ball of constant volumetric density σ and radius R_{sfr}. The ball inertia value will thus be I_{sfr} =2/5 m_{sfr} * R²_{sfr}
The following assumptions are made with regard to the moment of inertia of the rest of the vehicle and the operator:
- each motor and each battery is associated to a grounding point located in its center of gravity;
- the supporting structure, as well as the operator or driver, are each associated to a parallelepiped having a given mass, height, width and depth; and
- the weight of the remaining low-weight components is negligible.

Lagrange equations are used to analyze the physical model. In particular, a linearization of the model is used in the surround of the equilibrium point of the system to reduce the complexity of calculations. Specifically, α=0, dα/dt=0, sinα=0 and cosα=1. This translates into a simplified representation of the physical model in state equations in which the concerned coefficients depend only on constants, such as the values of the masses and of the dimensions of the components in play.

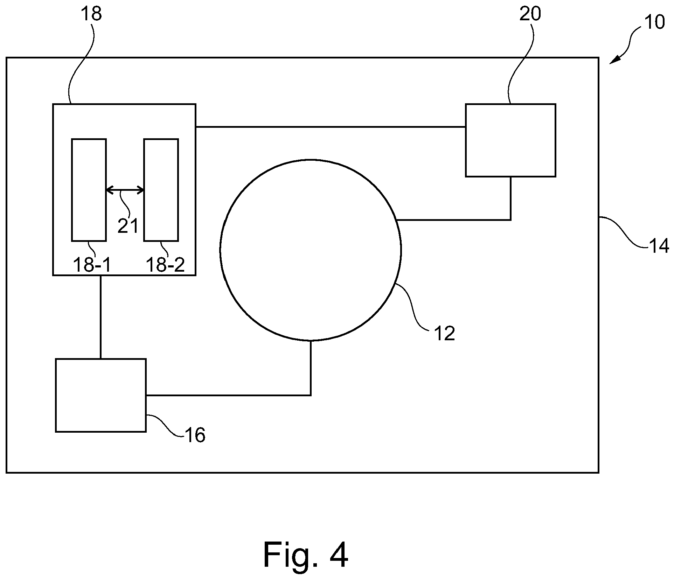

Figure 4 describes the vehicle 10 according to a preferred embodiment of the present invention. The vehicle 10 comprises a ball 12 and a support structure 14 associated to the ball 12. The vehicle 10 comprises one or more sensors 16 which are coupled to the ball and associated to a control module 18 which processes the measurement of one or more parameters measured by one or more sensors 16. The control module 18 comprises, in turn, two control boards 18-1, 18-2 interconnected to each other by means of a serial bus 21. Finally, the vehicle 10 comprises a mechanism 20 coupled to the ball 12 and controlled by the control module 18 to maintain the vehicle 10 in an equilibrium state.

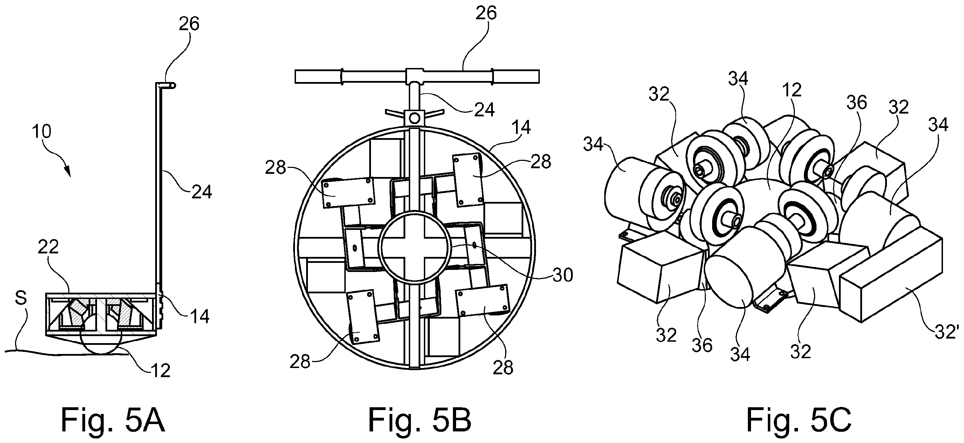

Figure 5A shows a representation of the vehicle 10 as a whole, seen from the side. From the figure, it can be seen that the support structure 14 cooperates with the ball 12 so that the latter is the only point of the contact with the ground S. In particular, at the base the structure 14 comprises a cylindrical-shape frame of 57 cm in diameter and 21.5 cm in height. The upper base of the cylindrical frame is the treadable base or platform 22 on which the driver is positioned. In equilibrium conditions, the platform 22 is at a height of about 29 cm from the ground S. The maximum inclination angle with respect to the vertical which can be assumed by the vehicle 10 is 15 degrees so as to allow acceptable maneuverability and equilibrium of the vehicle 10 in nearly vertical position with the motor off, making the need to fit a stand less stringent. Fixed to an edge of the platform 22, the handlebar 24 extends in front position, which handlebar 24 on the top has a handle structure 26 on which the driver can lean and to which a control panel (not shown in the figure) can be fixed.

Figure 5B shows the vehicle 10 from the bottom. The figure shows the presence of four supports 28 for the motors positioned symmetrically with respect to the center of the structure 14. In order to manage the inclination of the wheels more easily, the four pairs of motors and wheels (not shown in this figure) are each fixed onto a single block with adjustable angle to the forks of which the drive shaft is anchored by means of ball bearings. With regard to maintaining the ball 12 in the housing also when the vehicle 10 is lifted, the structure 14 is provided with a ring 30 on the base of the ball 12 which, although not limiting the movement in normal use, has the purpose of avoiding the exiting of the ball 12 from its housing.

Figure 5C shows the arrangement of some components of the vehicle 10, such as the batteries 32, the pairs of motors and wheels 34 and the mouse devices 36 with respect to the ball 12.

The batteries 32 are arranged so as to be mutually balanced with respect to the center of gravity of the ball 12, and the same applies to the motors with the wheels 34. The power battery of the boards 32' is positioned externally on the front side to balance the weight of the handlebar 24 (not shown in the figure). The mouse devices 36 are positioned on the bottom and their presence influences the position of two motors 34 out of four, which must be positioned at a slightly greater distance from the ball 12 to allow housing it.

With regard to the position of the contact point of the wheels with the pairs of motors and wheels 34 on the surface of the ball 12 with respect to the vertical axis, these are positioned at an angle of 45 degrees with respect to axis z itself with an inclination thereof with respect to the vertical of 7.5 degrees.

These values satisfy the requirement of limiting the stresses on the wheels and of maintaining the degrees of freedom in the control of the ball 12.

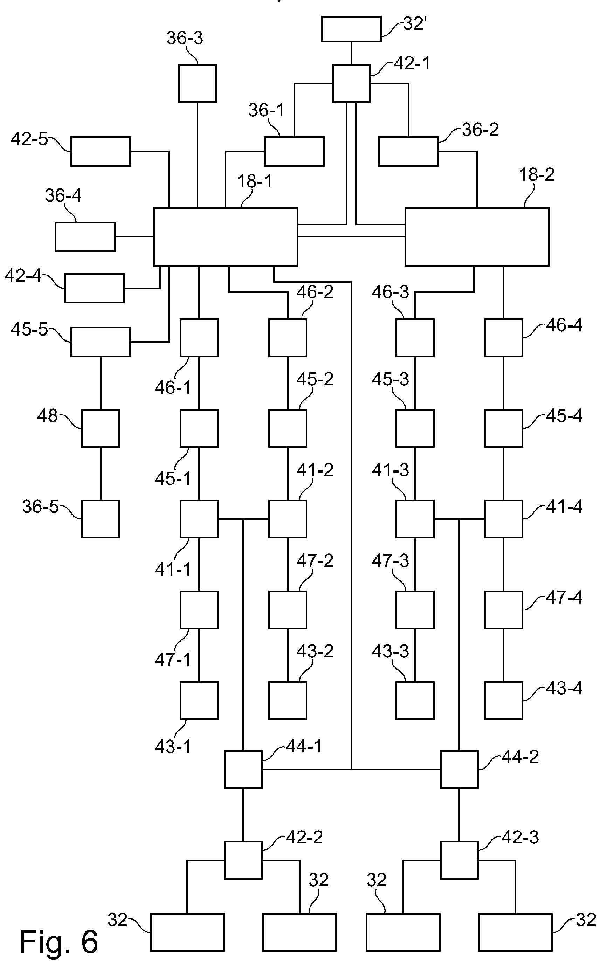

Finally, figure 6 shows a functional diagram of the electronic system of the vehicle 10.

The electronics guarantee the communication between the control boards 18-1, 18-2 and the sensors 36-1, 36-2, 36-3, 36-4, 36-5, the motor drivers 41-1, 41-2, 41-3, 41-4 and the controls 42-1, 42-2, 42-3, 42-4, 42-5 aboard the control panel on the handlebar 24. Since the operative voltages of the various components are not all the same, the electronic system as a whole must be divided into many subsystems operating at different voltages and, if necessary, must allow the exchange of information. Furthermore, the power circuit must be electrically separated from the control circuit. Failure to satisfy this feature may cause malfunctions of the control boards 18-1, 18-2 if the actuators are working. Finally, the radio frequency interference must be limited. The brushed motors generate both RF interferences and interferences along the power supply line.

The diagram in figure 6 comprises two Arduino Due control boards 18-1 and 18-2 so as to be able to control two mouse devices 36-1 and 36-2 by means of a USB hub.

The control boards 18-1 and 18-2 are powered by means of the USB Programming ports by using a specifically built voltage reducer. Such a reducer takes the voltage of the battery 32' dedicated to powering the boards 18-1 and 18-2 from 12V to5V and is equipped with four USB connectors (2 for the control boards 18-1, 18-2 and 2 for the mouse devices 36-1, 36-2). This reducer was dimensioned to guarantee a maximum current for the boards 18-1, 18-2 of 3A and a maximum current for the mouse devices 36-1, 36-2 of 1A, for a total of 20W of maximum deliverable power. The mouse devices 36-1, 36-2 are powered by this and not by the control boards 18-1, 18-2, because the power supply by the boards 18-1, 18-2 may be not able to guarantee a sufficient voltage for their operation. The control drivers 41-1, 41-2, 41-3, 41-4 of the motors 43-1, 43-2, 43-3, 43-4 are powered directly by the four remaining batteries 32. These are arranged, in pairs, in series, to guarantee a power voltage of 24V. The power voltage supplied by the Hall effect sensors 36-5 present on the driver boards 41-1, 41-2, 41-3, 41-4 comes from four voltage reducers from 24V to 5V, one for each motor 43-1, 43-2, 43-3, 43-4. Such reducers have the purpose of powering the part of electronics operating at 5V arranged on the side of the motors 43-1, 43-2, 43-3, 43-4 of the optoisolator system.

The interface electronics between the control boards 18-1, 18-2 and the optoisolator system is powered directly by the control boards 18-1, 18-2. The operating voltages of such electronics are5V and3.3V.

The power supply of the motors 43-1, 43-2, 43-3, 43-4 must only occur when the control boards 18-1, 18-2 are supplied and no longer in boot-up step. For this reason, a relay-based circuit 44-1, 44-2 is present to disconnect the power supply of the motors 43-1, 43-2, 43-3, 43-4 if this situation did not occur. The power supply of the relays 44-1, 44-2 from the power supply battery 32' of the boards 18-1, 18-2 and are controlled by a logical signal at 3.3V. Since the relays 44-1, 44-2 can be controlled by means of a signal at 12V, there is a circuit portion (not shown in the figure) adapted to take the signal from the 0-3.3V bandwidth to the 0-12V bandwidth.

The electrical insulation between the power circuit and the control circuit is guaranteed by a system of optoisolators 45-1, 45-2, 45-3, 45-4, 45-5. The optoisolators 45-1, 45-2, 45-3, 45-4, 45-5 are devices which provide the electronic insulation between the two circuits by concurrently allowing the passage of information by using an LED and a receiver. The electronic system according to the present invention uses 24 digital optoisolators 45-1, 45-2, 45-3, 45-4 and 4 analog optoisolators 45-5.

The digital optoisolators 45-1, 45-2, 45-3, 45-4 are needed to communicate the PWM signals to the drivers 41-1, 41-2, 41-3, 41-4 by the control boards 18-1, 18-2, and to check for the presence of errors signaled by the drivers 41-1, 41-2, 41-3, 41-4 and for the possible resetting operation in case of malfunctions. Since the operating voltage of these optoisolators 45-1, 45-2, 45-3, 45-4 is 5V, logical level converters (LLC) 46-1, 46-2, 46-3, 46-4 are present to take the logical signal from the 0-3.3V bandwidth to the 0-5V bandwidth and vice versa.

The analogue optoisolators 45-5 are indispensable for reading the voltages (analog) output from the Hall effect sensors 36-5 aboard the drivers 41-1, 41-2, 41-3, 41-3. Such voltages must be transmitted to the control boards 18-1, 18-2, while maintaining the insulation. A shaping system 48 of the signal is associated in input to each analog optoisolator 45-5.

In order to damp the current peaks drawn by the motors 43-1, 43-2, 43-3, 43-4, and to reduce the interferences caused by them, the electronic system also envisages the use of RF limiting circuits 47-1, 47-2, 47-3, 47-4 at the terminals of the motors 43-1, 43-2, 43-3, 43-4 themselves.

As highlighted, the method 100 for managing the movement of the vehicle 10 mounted on ball 12 is designed to efficiently control said vehicle 10 in which the ball represents the only contact point with the ground and allows the vehicle 10 to move indifferently in all directions on a plane.

A person skilled in art may make further changes and variants to the method described above and to the ball-mounted vehicle using such a method, all of which changes and variants are comprised in the scope of protection of the present invention as defined in the following claims.

## Claims

1. A method for managing the movement of a vehicle (10) configured for transporting a load comprising a ball (12) and a support structure (14) cooperating with said ball (12), wherein the ball (12) represents the single point of contact with the ground (S) and is configured for moving the vehicle (10) with respect to the ground (S), the method comprising the steps of:
- measuring at least one parameter (101) relative to the position of the vehicle (10) with respect to the ground (S) by means of at least one sensor (16) positioned on the vehicle (10);
- processing the measurement of said parameter (102) in a first subsystem which represents the pattern of the vehicle (10) along the vertical plane yz which divides the vehicle (10) in its front and rear halves and in a second subsystem which represents the pattern of the vehicle (10) along the vertical plane xz, orthogonal to plane yz, which divides the vehicle (10) in its right and left halves;
- estimating a dynamic state (103) of the vehicle (10) based on the processing of at least said parameter and calculating control information (104) through a control module (18); and
- implementing at least one mechanism (20) in response to the calculation of the control information (104) to maintain the vehicle (10) in an equilibrium state, said mechanism (20) being coupled with the ball (20);
**characterized in that** the processing of the measurement of the parameter (102) in the first and in the second subsystem takes place in a parallel and synchronized manner.

2. A method according to claim 1, **characterized in that** the processing of the measurement of the parameter in the first subsystem takes place by means of a first control board (18-1) while the processing of the measurement of the parameter in the second subsystem takes place by means of a second control board (18-2).

3. A method according to claim 2, **characterized in that** the estimate of the dynamic state (103) of the vehicle (10) and the calculation of the control information (104) are carried out only by the first control board (18-1).

4. A method according to one of the preceding claims, **characterized in that** the processing of the measurement of said parameter (102) further comprises the calculation of the variation of said parameter as a function of time.

5. A method according to one of the preceding claims, **characterized by** measuring a first parameter (β) relative to the angle traveled by the ball (12) with respect to the ground (S) and a second parameter (α) relative to the inclination of the vehicle (10) with respect to the vertical of the ground (S).

6. A method according to claim 5, **characterized in that** the variation over time of the first parameter (β) is used to calculate the control information (104) to adjust the second parameter (α).

7. A method according to claim 5 or 6, **characterized by** measuring a third parameter relative to the rotation angle about the vertical axis of a handlebar (24) associated with the support structure (14) which is fixed with respect thereto and configured for rotating about its own vertical axis.

8. A vehicle (10) configured for transporting a load comprising a ball (12) and a support structure (14) cooperating with said ball (12), wherein the ball (12) represents the single point of contact with the ground (S) and is configured for moving the vehicle (10) with respect to the ground (S), the vehicle (10) further comprising:
- at least one sensor (16) measuring at least one parameter relative to the position of the vehicle (10) with respect to the ground (S);
- a control module (18) processing the measurement of said parameter in a first subsystem which represents the pattern of the vehicle (10) along the vertical plane yz which divides the vehicle (10) in its front and rear halves and in a second subsystem which represents the pattern of the vehicle (10) along the vertical plane xz, orthogonal to plane yz, which divides the vehicle (10) in its right and left halves and for estimating a dynamic state of the vehicle (10) based on the processing of at least said parameter and calculating control information; and
- a mechanism (20) coupled to the ball (12) which is actuated in response to the calculation of the control information to maintain the vehicle (10) in an equilibrium state, **characterized in that** the control module (18) processes the measurement of the parameter in the first and in the second subsystem in a parallel and synchronized manner.

9. A vehicle according to claim 8, **characterized in that** the control module (18) comprises a first control board (18-1) for measuring the parameter in the first subsystem and a second control board (18-2) for measuring the parameter in the second subsystem.

10. A vehicle according to claim 8 or 9, **characterized in that** it comprises an optical sensor (36-1, 36-2) positioned at a close distance from the surface of the ball (12) for measuring a first parameter (β) relative to the angle traveled by the ball (12) with respect to the ground (S) and a device (36-4) for measuring a second parameter (α) relative to the inclination of the vehicle (10) with respect to the vertical of the ground (S).

11. A vehicle according to claim 10, **characterized in that** the support structure (14) comprises a handlebar (24) fixed with respect thereto and configured for rotating about its own vertical axis and **characterized in that** it further comprises a device (36-3) for measuring a third parameter relative to the rotation angle about the vertical axis of said handlebar (24).

## Patentansprüche

1. Verfahren zur Verwaltung der Bewegung eines zum Transport einer Last ausgebildeten Fahrzeugs (10), umfassend eine Kugel (12) und eine mit der Kugel (12) zusammenwirkende Trägerstruktur (14), wobei die Kugel (12) die einzige Kontaktstelle mit dem Boden (S) darstellt und ausgebildet ist, um das Fahrzeug (10) in Bezug auf den Boden (S) zu bewegen, wobei das Verfahren folgende Schritte umfasst:
- Messen mindestens eines Parameters (101) relativ zur Position des Fahrzeugs (10) in Bezug auf den Boden (S) mittels mindestens eines auf dem Fahrzeug (10) positionierten Fühlers (16);
- Verarbeiten der Messung des Parameters (102) in einem ersten Untersystem, das das Muster des Fahrzeugs (10) entlang der vertikalen Ebene yz darstellt, die das Fahrzeug (10) in seine vordere und hintere Hälfte unterteilt, und in einem zweiten Untersystem, das das Muster des Fahrzeugs (10) entlang der vertikalen Ebene xz darstellt, orthogonal zur Ebene yz, die das Fahrzeug (10) in seine rechte und linke Hälfte unterteilt;
- Schätzen eines dynamischen Zustands (103) des Fahrzeugs (10) basierend auf der Verarbeitung mindestens des Parameters und Berechnen von Steuerinformationen (104) durch ein Steuermodul (18); und
- Implementieren mindestens eines Mechanismus (20) in Reaktion auf die Berechnung der Steuerinformationen (104), um das Fahrzeug (10) in einem Gleichgewichtszustand zu halten, wobei der Mechanismus (20) mit der Kugel (20) gekoppelt ist;
**dadurch gekennzeichnet, dass** das Verarbeiten der Messung des Parameters (102) im ersten und zweiten Untersystem parallel und synchron vorgenommen wird.

2. Verfahren nach Anspruch 1, **dadurch gekennzeichnet, dass** die Verarbeitung der Messung des Parameters in dem ersten Untersystem mittels einer ersten Steuerplatine (18-1) vorgenommen wird, während die Verarbeitung der Messung des Parameters im zweiten Untersystem mittels einer zweiten Steuerplatine (18-2) vorgenommen wird.

3. Verfahren nach Anspruch 2, **dadurch gekennzeichnet, dass** die Bewertung des dynamischen Zustands (103) des Fahrzeugs (10) und die Berechnung der Steuerinformationen (104) nur von der ersten Steuerplatine (18-1) vorgenommen werden.

4. Verfahren nach einem der vorstehenden Ansprüche, **dadurch gekennzeichnet, dass** die Verarbeitung der Messung des Parameters (102) ferner die Berechnung der Änderung des Parameters als eine Zeitfunktion umfasst.

5. Verfahren nach einem der vorstehenden Ansprüche, **gekennzeichnet durch** die Messung eines ersten Parameters (β) relativ zu dem von der Kugel (12) durchlaufenen Winkel in Bezug auf den Boden (S) und eines zweiten Parameters (α) relativ zur Neigung des Fahrzeugs (10) in Bezug auf die Vertikale des Bodens (S).

6. Verfahren nach Anspruch 5, **dadurch gekennzeichnet, dass** der zeitliche Verlauf des ersten Parameters (β) zur Berechnung der Steuerinformationen (104) verwendet wird, um den zweiten Parameter (α) anzupassen.

7. Verfahren nach Anspruch 5 oder 6, **gekennzeichnet durch** die Messung eines dritten Parameters relativ zum Drehwinkel um die vertikale Achse einer mit der Trägerstruktur (14) verbundenen Lenkerstange (24), die in Bezug hierzu befestigt und zum Drehen um ihre eigene Achse ausgebildet ist.

8. Fahrzeug (10), das zum Transport einer Last, umfassend eine Kugel (12) und eine mit der Kugel (12) zusammenwirkende Trägerstruktur (14), ausgebildet ist, wobei die Kugel (12) die einzige Kontaktstelle mit dem Boden (S) darstellt und ausgebildet ist, um das Fahrzeug (10) in Bezug auf den Boden (S) zu bewegen, wobei das Fahrzeug (10) ferner umfasst:
- mindestens einen Fühler (16) zur Messung mindestens eines Parameters relativ zur Position des Fahrzeugs (10) in Bezug auf den Boden (S);
- ein Steuermodul (18) zur Verarbeitung der Messung des Parameters in einem ersten Untersystem, das das Muster des Fahrzeugs (10) entlang der vertikalen Ebene yz darstellt, die das Fahrzeug (10) in seine vordere und hintere Hälfte unterteilt, und in einem zweiten Untersystem, das das Muster des Fahrzeugs (10) entlang der vertikalen Ebene xz darstellt, vertikal zur Ebene yz, die das Fahrzeug (10) in seine rechte und linke Hälfte unterteilt, und zum Schätzen eines dynamischen Zustands des Fahrzeugs (10) basierend auf der Verarbeitung mindestens des Parameters und Berechnen von Steuerinformationen; und
- einen mit der Kugel (12) gekoppelten Mechanismus (20), der in Reaktion auf die Berechnung der Steuerinformationen betätigt wird, um das Fahrzeug (10) in einem Gleichgewichtszustand zu halten, **dadurch gekennzeichnet, dass** das Steuermodul (18) die Messung des Parameters in dem ersten und zweiten Untersystem parallel und synchron verarbeitet.

9. Fahrzeug nach Anspruch 8, **dadurch gekennzeichnet, dass** das Steuermodul (18) eine erste Steuerplatine (18-1) zur Messung des Parameters in dem ersten Untersystem und eine zweite Steuerplatine (18-2) zur Messung des Parameters im zweiten Untersystem umfasst.

10. Fahrzeug nach Anspruch 8 oder 9, **dadurch gekennzeichnet, dass** es einen optischen Fühler (36-1, 36-2) umfasst, der in dichtem Abstand von der Oberfläche der Kugel (12) angeordnet ist zur Messung eines ersten Parameters (β) relativ zu dem von der Kugel (12) durchlaufenen Winkel in Bezug auf den Boden (S) und eine Vorrichtung (36-4) zur Messung eines zweiten Parameters (α) relativ zur Neigung des Fahrzeugs (10) in Bezug auf die Vertikale des Bodens (S).

11. Fahrzeug nach Anspruch 10, **dadurch gekennzeichnet, dass** die Trägerstruktur (14) eine Lenkerstange (24) umfasst, die in Bezug hierzu befestigt und zum Drehen um ihre eigene vertikale Achse ausgebildet und **dadurch gekennzeichnet ist, dass** sie ferner eine Vorrichtung (36-3) zur Messung eines dritten Parameters relativ zum Drehwinkel um die vertikale Achse der Lenkerstange (24) umfasst.

## Revendications

1. Un procédé pour gérer le déplacement d'un véhicule (10) configuré afin de transporter une charge comprenant une bille (12) et une structure de support (14) coopérant avec ladite bille (12), dans lequel la bille (12) représente le point unique de contact avec le sol (S) et est configurée pour déplacer le véhicule (10) par rapport au sol (S), le procédé comprenant les étapes consistant à :
- mesurer au moins un paramètre (101) relatif à la position du véhicule (10) par rapport au sol (S) au moyen d'au moins un capteur (16) positionné sur le véhicule (10) ;
- traiter la mesure dudit paramètre (102) dans un premier sous-système qui représente le modèle du véhicule (10) le long du plan vertical yz qui divise le véhicule (10) en ses moitiés avant et arrière et dans un deuxième sous-système qui représente le modèle du véhicule (10) le long du plan vertical xz, orthogonal au plan yz, qui divise le véhicule (10) en ses moitiés droite et gauche ;
- estimer un état dynamique (103) du véhicule (10) sur la base du traitement d'au moins ledit paramètre et calculer des informations de commande (104) par le biais d'un module de commande (18) ; et
- mettre en oeuvre au moins un mécanisme (20) en réponse au calcul des informations de commande (104) pour maintenir le véhicule (10) dans un état d'équilibre, ledit mécanisme (20) étant couplé à la bille (20) ;
**caractérisé en ce que** le traitement de la mesure du paramètre (102) dans le premier et dans le deuxième sous système a lieu de manière parallèle et synchronisée.

2. Un procédé selon la revendication 1, **caractérisé en ce que** le traitement de la mesure du paramètre dans le premier sous-système a lieu au moyen d'une première carte de commande (18-1) tandis que le traitement de la mesure du paramètre dans le deuxième sous-système a lieu au moyen d'une deuxième carte de commande (18-2).

3. Un procédé selon la revendication 2, **caractérisé en ce que** l'estimation de l'état dynamique (103) du véhicule (10) et le calcul des informations de commande (104) sont effectuées seulement par la première carte de commande (18-1).

4. Un procédé selon l'une des revendications précédentes, **caractérisé en ce que** le traitement de la mesure dudit paramètre (102) comprend en outre le calcul de la variation dudit paramètre en fonction du temps.

5. Un procédé selon l'une des revendications précédentes, **caractérisé par** le fait de mesurer un premier paramètre (β) relatif à l'angle parcouru par la bille (12) par rapport au sol (S) et d'un deuxième paramètre (α) relatif à l'inclinaison du véhicule (10) par rapport à la verticale du sol (S).

6. Un procédé selon la revendication 5, **caractérisé en ce que** la variation au cours du temps du premier paramètre (β) est utilisée pour calculer les informations de commande (104) afin d'ajuster le deuxième paramètre (α).

7. Un procédé selon la revendication 5 ou la revendication 6, **caractérisé par** le fait de mesurer un troisième paramètre relatif à l'angle de rotation autour de l'axe vertical d'un guidon (24) associé à la structure de support (14) qui est fixe par rapport à celle-ci et configuré pour tourner autour de son propre axe vertical.

8. Un véhicule (10) configuré pour transporter une charge comprenant une bille (12) et une structure de support (14) coopérant avec ladite bille (12), dans lequel la bille (12) représente le point unique de contact avec le sol (S) et est configurée pour déplacer le véhicule (10) par rapport au sol (S), le véhicule (10) comprenant en outre :
- au moins un capteur (16) mesurant au moins un paramètre relatif à la position du véhicule (10) par rapport au sol (S) ;
- un module de commande (18) traitant la mesure dudit paramètre dans un premier sous-système qui représente le modèle du véhicule (10) le long du plan vertical yz qui divise le véhicule (10) en ses moitiés avant et arrière et dans un deuxième sous-système qui représente le modèle du véhicule (10) le long du plan vertical xz, orthogonal au plan yz, qui divise le véhicule (10) en ses moitiés droite et gauche et pour estimer un état dynamique du véhicule (10) sur la base du traitement d'au moins ledit paramètre et du calcul des informations de commande ; et
- un mécanisme (20) couplé à la bille (12) qui est actionné en réponse au calcul des informations de commande pour maintenir le véhicule (10) dans un état d'équilibre, **caractérisé en ce que** le module de commande (18) traite la mesure du paramètre dans le premier et le deuxième sous-système de manière parallèle et synchronisée.

9. Un véhicule selon la revendication 8, **caractérisé en ce que** le module de commande (18) comprend une première carte de commande (18-1) pour mesurer le paramètre dans le premier sous-système et une deuxième carte de commande (18-2) pour mesurer le paramètre dans le deuxième sous-système.

10. Un véhicule selon la revendication 8 ou la revendication 9, **caractérisé en ce qu'**il comprend un capteur optique (36-1, 36-2) positionné à une distance proche de la surface de la bille (12) pour mesurer un premier paramètre (β) relatif à l'angle parcouru par la bille (12) par rapport au sol (S) et un dispositif (36-4) pour mesurer un deuxième paramètre (α) relatif à l'inclinaison du véhicule (10) par rapport à la verticale du sol (S).

11. Un véhicule selon la revendication 10, **caractérisé en ce que** la structure de support (14) comprend un guidon (24) fixe par rapport à celle-ci et configuré pour tourner autour de son propre axe vertical et **caractérisé en ce qu'**il comprend en outre un dispositif (36-3) pour mesurer un troisième paramètre relatif à l'angle de rotation autour de l'axe vertical dudit guidon (24).
